# EUROPEAN PATENT SPECIFICATION

(11) **EP 0 596 629 B1**
(45) Date of publication and mention of the grant of the patent: **01.03.2000**
(21) Application number: 93308447.7
(22) Date of filing: 22.10.1993
(51) Int. Cl.: H04N 13/04, H04N 1/23

(54) **Method of and apparatus for making a print containing parallax information**
Verfahren und Gerät zum Herstellen von Abdrucken, die Parallaxeinformationen enthalten
Méthode et appareil pour l'impression d'un épreuve contenant des informations de parallaxe

(30) Priority: 23.10.1992 GB 9222346
(43) Date of publication of application: 11.05.1994
(73) Proprietor: SHARP KABUSHIKI KAISHA, Osaka-shi, Osaka-fu 545-0013 (JP)
(72) Inventor: Harrold, Jonathan, Sanford-On-Thames, Oxford 0X4 4XS (GB); Woodgate, Graham John, Henley-On-Thames, Oxfordshire RG9 1TD (GB); Ezra, David, Wallingford, Oxon 0X10 0RL (GB)
(74) Representative: Robinson, John Stuart

(56) References cited:
- EP-A- 0 354 851
- WO-A-90/08343
- WO-A-91/10310
- DE-A- 2 028 938

## Description

The present invention relates to a method of and an apparatus for making a print containing parallax information. Such a method and apparatus may be used to provide a printer for producing 3D (three dimensional) hard-copy in full colour, which printer can be implemented with technology consistent with a low cost device capable of operation as, for example, a computer peripheral or fax in an office environment.

True 3D displays can provide substantially more information than 2D displays. There are many applications such as medical imaging and CAD systems which can benefit from 3D visualisation. Hard-copy allows this information to be disseminated effectively, particularly if the image can be produced as an output from a computer workstation (using computer graphic techniques or digitally captured images). To be effective, there is a need for a computer peripheral printer with high speed production technique, ease of use, low cost and convenience of manufacture. Furthermore, it is very desirable to be able to view the 3D hard-copy without the use of special viewing aids. This implies that an autostereoscopic 3D technology is required.

A known technique for computer based 3D hard-copy production involves multiplexed holography. In this method, computer graphic techniques are applied to a 3D data base to construct a sequence of 2D images on a photographic film, which images are holographically multiplexed to produce a 3D image. Recently there have been suggestions to replace the photographic film with an LCD (liquid crystal device) as the projection medium in order to speed production.

However, these techniques have problems concerning cost, true colour, reproduction, materials, illumination requirements, and hardware fabrication. These problems are not likely to be substantially overcome in the foreseeable future. All these make holographic methods impractical for general use as an office computer peripheral printer.

Known non-holographic techniques for 3D hard-copy production include lenticular, microlens and barrier parallax methods. Lenticular methods are generally superior to barrier parallax in their brightness. Indeed, lenticular hard-copy displays produced using photographic methods are quite impressive. Here a special camera arrangement is used to produce a continuous composite image which can be viewed with minimum limitations of viewing distance. However, these methods are not suitable for computer generated or other digital applications.

In computer generation and other digital applications (video capture for example), it is impossible to produce a continuous composite image, but instead a finite number of discrete views must be merged. It is necessary to have a large number of views for improved 3D image quality for more flexible viewing geometry. Each of the 2D images is a view of the object from a particular direction, and is replayed in that direction. The accuracy of the 3D image increases as the number of 2D views displayed increases. The actual creation of the 3D hardcopy can use an optical recording method (projection through an LCD device), on photographic film or digital printing techniques on photographic film (New Scientist 26 Sep 92 p19). While these methods are capable of producing high quality multi view images due to the high resolution offered by photographic film, they suffer from two limitations:-
1. Photographic processing
2. Difficulties in registration due to size changes as a result of the processing or temperature/humidity changes.

For these reasons, and particularly the first one, these methods are not suited for an office peripheral printer application.

Methods using direct electronic printing techniques have been reported by Lore and McAllister in SPIE Vol. 1083 (1989) p.102.

It is known, for instance from GB 1 273 062, GB 1 596 387, GB 2 184 286A, GB 2 185 825A, WO 92/03021, and US 5083199, to display parallax information contained on a substrate by positioning a lens array over, adjacent, or in contact with the substrate. However, such techniques suffer from difficulties in registration as mentioned here in before.

Previous attempts to produce non-holographic 3D hard copy in which a computer-generated image is printed on to a substrate which is subsequently sandwiched with a lenticular sheet have suffered from a number of problems. These include lack of printer resolution, lack of precision in the positioning of pixels in the printed output, (insufficient printer accuracy with high addressability), extreme difficulty in registering the separate printed media with the lenticular sheet, cross talk of the images, Moire fringing and lack of views causing significant image flipping.

WO-A-90/08343 discloses a method of making a print containing parallax information according to the preamble of claim 1. It relates to a method of computer generating an "intermediate" 3-D image from a series of 2-D images by interleaving the 2-D images. Once the "intermediate" 3-D image has been generated, it is used in a conventional printing process such as a 4-colour offset printing process. The 3-D image is transferred to a parallax barrier or to a lenticular substrate using the offset printing process. Any dimensional changes that occur during the process of making the printing plate will introduce registration errors into the image produced on the parallax barrier or the lenticular substrate.

DE-A-2 028 938 also relates to a method of making a 3-D print using a conventional printing method such as an offset printing method.

WO-A-91/10310 relates to a method of producing 2-D prints using a laser induced thermal transfer printing method.

EP-A-0 354 851 relates to a method of displaying a stereoscopic image using 2 projectors. One projector provides an image for the left eye of an observer, and the other projector provides and image for the right eye of the observer.

According to a first aspect of the present invention there is provided a method of making a print containing parallax information, comprising writing a plurality of picture elements onto a first substrate, which comprises a lens array substrate or a parallax barrier substrate, wherein each of the picture elements is aligned with a respective lens of the lens array substrate or a respective aperture of the parallax barrier substrate, and wherein each of the picture elements comprises a plurality of interlaced image elements from respective images; characterised in that the picture elements are written onto the first substrate by selectively transferring at least one colourant from a colourant donor substrate; and in that the colourant is transferred by selectively heating the colourant donor substrate by scanning the colourant donor substrate with at least one modulated electromagnetic beam.

Such a method may be used to make 3-D prints. However, such a method may also be used to provide prints containing other parallax information, for instance signs which provide different information when viewed from different directions.

According to a second aspect of the present invention there is provided a method of making a 3D print, characterised in that it comprises: locating a colourant donor substrate comprising a substrate carrying at least one colourant adjacent a colourant receiving substrate; selectively transferring colourant to the receiving substrate so as to form a plurality of 3D picture elements, each of which comprises a plurality of interlaced 2D picture elements; and aligning each 3D picture element with a respective lens of a lens array sheet or a respective aperture of a parallax barrier sheet; wherein the colourant is transferred by selectively heating the colourant source by scanning the colourant donor substrate with at least one modulated electromagnetic beam.

According to a third aspect of the present invention there is provided an apparatus for making a 3D print, characterised by comprising: means for locating a colourant donor substrate comprising a substrate carrying at least one colourant adjacent a colourant receiving substrate; means for selectively transferring colourant to the receiving substrate so as to form a plurality of 3D picture elements, each of which comprises a plurality of interlaced 2D picture elements; and means for aligning each 3D picture element with a respective lens of a lens array sheet or a respective aperture of a parallax barrier sheet; wherein the transferring means comprises thermal transferring means for scanning the colourant donor substrate with at least one modulated electromagnetic light beam so as to selectively heat the colourant source.

The colourant source is a colourant donor substrate. The donor substrate may be in contact with the receiving substrate during transfer.

The or each substrate may, for instance, comprise a sheet, film, or roll.

The donor substrate may carry a single colour colourant, such as black, for providing monochrome prints, or may carry a plurality of different colours, for providing colour prints. The colourant may, for instance, comprise dye, dye precursor pigment, ink, or toner. The transfer is performed thermally, for instance by scanning the donor sheet with at least one modulated electromagnetic beam or by means of a light valve or light valve array. A technique known as laser induced thermal transfer (LITT) may be used and employs a modulated laser beam to scan the donor sheet. Such a technique is disclosed in GB 2083726 or WO 91/10310. Such a technique is both capable of sufficient resolution for multiview generation, and for use as a computer peripheral printer. A further advantage is that this process does not dimensionally deform the receiving substrate, hence registration and shrinkage problems are minimised.

The donor substrate may, for instance, comprise Mylar. The receiving substrate may be made of a polymer, such as PVC or polyester.

The colourant may be transferred to the receiving substrate which is already or is subsequently bonded to the lens array sheet or parallax barrier sheet with the lenses or apertures aligned with the 3D picture elements. Alternatively, where the lens array sheet or parallax barrier sheet is made of or coated with a suitable material, the colourant may be transferred directly to the lens array sheet or the parallax barrier sheet with the 3D picture elements in alignment with the lenses or apertures.

In order to provide 1D parallax in a lens array sheet implementation, the lens array sheet preferably comprises a lenticular sheet comprising elongate converging lenses spaced with a pitch which is less than or equal to the pitch of the 3D picture elements. For a parallax barrier sheet implementation, the parallax barrier sheet preferably comprises a plurality of slits spaced with a pitch which is less than or equal to the pitch of the 3D picture elements.

To provide 2D parallax in a lens array sheet implementation, the lens array sheet preferably comprises a microlens array sheet comprising a regular array of converging microlenses having a pitch which is less than or equal to the pitch of the 3D picture elements. For a parallax barrier sheet implementation, the parallax barrier sheet preferably comprises a regular array of apertures having a pitch which is less than or equal to the pitch of the 3D picture elements.

In the case of a lens array sheet, the lenses may be formed by curved surfaces, by means of gradient in refractive index (GRIN), or by a combination of these techniques.

The picture elements may be disposed in a plane and a light or other electromagnetic diffusing layer may be provided substantially at the plane of the 3D picture elements.

Where the transfer of colourant is performed by means of a scanning beam, the beam may be registered with the lenses of the lens array sheet or the apertures of the parallax barrier sheet during or before transfer. For instance, the lenses or apertures may be scanned before transfer, the transitions between the lenses or the locations of the apertures registered, and the beam aligned thereto during transfer. Alternatively or additionally, registration means may be provided on the lens array sheet or on the parallax barrier sheet outside an image area thereof.

The receiving substrate may be separate from the lens array sheet or the parallax barrier sheet and the 3D print may be viewed by projecting the 3D picture elements onto the lens array sheet or parallax barrier sheet, or onto a diffuser located between the receiving substrate and the lens array sheet or parallax barrier sheet.

The invention will be further described, by way of example, with reference to the accompanying drawings, in which:
Figure 1 illustrates steps in the formation of a 3D image in a method constituting an embodiment of the invention;
Figure 2 illustrates the arrangement 3D picture elements (pixels) produced by the steps illustrated in Figure 1;
Figure 3 illustrates an example of the relative alignment between a lenticular screen and 3D pixels;
Figure 4 illustrates three techniques for producing different print densities or "grey levels";
Figure 5 illustrates two substrate orientations with respect to a fast scan axis of a printer; and
Figure 6 shows diagrammatically a printer constituting an embodiment of the invention.

The method and apparatus described hereinafter are used to print a 3D hard-copy of an image which has been captured or synthesised as a number of pixellated 2D views of an object from a range of positions. The 2D views may, for instance, have been captured by means of suitable photographic or video cameras using frame-store equipment or photographic scanning techniques. Alternatively, the views may have been synthesised, for instance by direct computer generation.

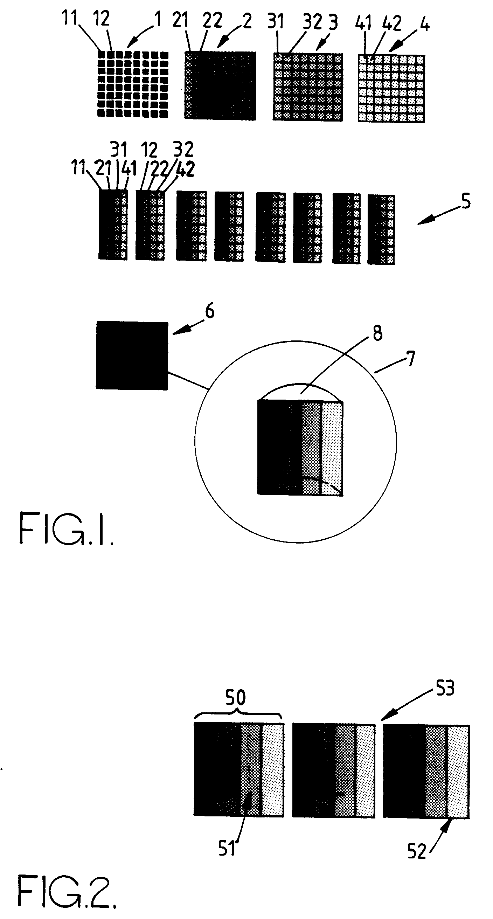

Figure 1 illustrates four pixellated 2D views 1 to 4 which have been captured or synthesised as described above. Each view is pixellated into a regular rectangular array of pixels. The four views 1 to 4 are then vertically interlaced as illustrated at 5 such that the first picture elements 11, 21, 31, and 41 of the views 1 to 4 are juxtaposed to form a first row of a first vertical slice, followed by the second picture elements 12, 22, 32, and 42 to form the first row of the next vertical slice, and so on. The aspect ratio of the resulting interlaced 3D image is then reduced by compressing the horizontal axis to provide the 3D image 6. The horizontally compressed pixels are shown in the enlarged portion 7 in registration with a lenticule 8 of a lenticular sheet on to the back of which the pixels are printed.

Figure 2 illustrates the arrangement of 3D pixels 50, each of which is made up of four 2D pixels 51 in the four view arrangement shown in the drawings. In order to avoid the appearance of unwanted artifacts in the 3D image, adjacent 2D pixels are contiguous with each other as shown at 52 but do not substantially overlap with each other. The 3D pixels 50 are not required to be contiguous and a gap 53 between adjacent 3D pixels may be provided so as to ensure that no overlapping occurs and to ease registration with the lenticular sheet.

The resolution of the lenticular sheet, which defines the horizontal resolution of the image, is selected so that, at the intended typical viewing distance, the screen structure is substantially invisible. For relatively small images, the pitch of the elements of the lenticular sheet may be substantially equal to the pitch of the 3D pixels and the height of the pixels may be of the order of the lenticular pitch. However, it may be advantageous to enhance the appearance of the image by using a vertical resolution which is greater than the lenticular pitch. This allows the constraints on the lenticular resolution to be relaxed, thus simplifying system design.

The finite size of the 2D image pixels means that the resulting 3D image appears to be made up of a number of slices of the views of width dependent on the lenticular sheet geometry, the 2D pixel width, and the observer position. If a small number of views is available and/or if a relatively wide image is to be printed, then there may be insufficient slices to fill the visual field of the observer with 3D views. In particular, each eye of the observer may see different 2D views across the width of the hard-copy, thus destroying the 3D effect. In this case, the pitch of the elements of the lenticular sheet may be made slightly less than the pitch of the 3D pixels so as to ensure that each eye of the observer sees the same 2D view across the whole width of the hard-copy. This is illustrated in Figure 3, in which the 3D pixels 51 are offset with respect to optical axes 55 of the elements 56 of the lenticular sheet by amounts which increase with distance from the centre 57 of the hard-copy. This ensures that each eye of the observer 58 sees a 2D pixel from the same 2D image across the whole width of the hard-copy.

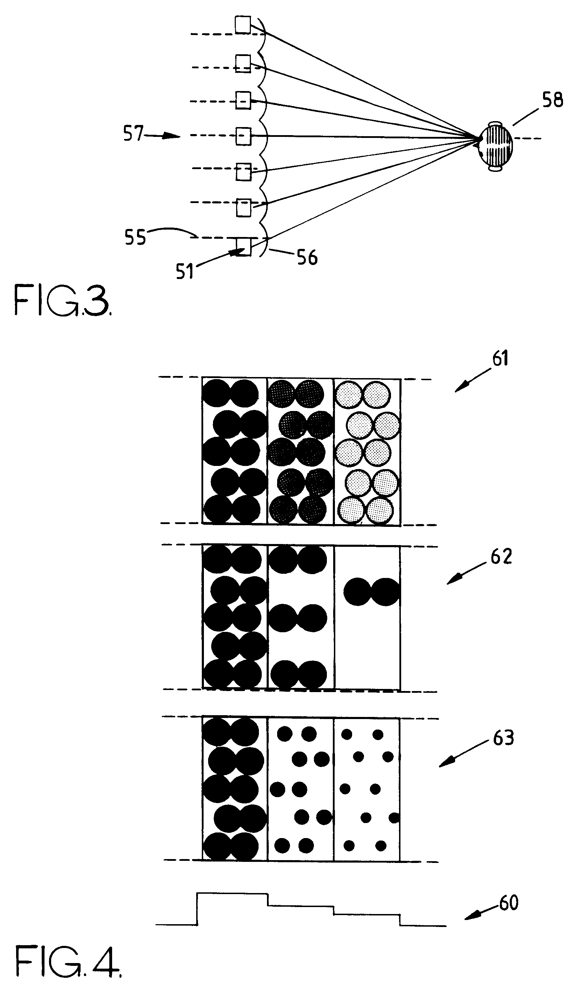

Figure 4 illustrates three different techniques for the production of grey levels. The curve 60 illustrates the relative density or darkness of the grey levels of the pixels shown directly thereabove. The pixels shown at 61 permit production of different grey levels by spot density modulation, in which the density of each printed spot is varied in accordance with the desired density of the pixel. As shown at 62, the same grey levels may be achieved by spatial modulation whereby the printed spots have the same density but the number of spots in each picture element is varied. The sizes of the spots shown at 61 and 62 are the same. However, by varying the sizes of the spots while maintaining the same number of spots per unit area and optical density of each spot as shown at 63, the grey levels may be achieved by spot size modulation. However, in order to produce good quality images, it is important that the 2D pixels have uniform density over their entire width when integrated along the horizontal extent of the pixels.

The above techniques may be used in combination.

Colour printing may be achieved by over-printing pixels of different colours or by printing different 2D colour pixels vertically above each other, thus taking advantage of the extra vertical resolution afforded by the rectangular shaped 2D pixels. Cross talk or over writing of a 2D image pixel with information from an adjacent pixel must be limited, for instance to less than 5%, so as to avoid loss of the 3D effect.
Consequently, registration of colours in colour printing is important and must be carefully controlled. Although circular printing spots are shown in Figure 4, non-circular spots may be used in order to improve the production of sharp edges at the edges of the 2D pixels, or for reasons of system simplification.

At the edge of the 3D print, off-axis aberration of the image may become significant. This may be relieved at least partially by the use of a substrate of the type disclosed in EP-A-404289.

Care has to be taken to avoid the production of Moire fringes generated by beating between harmonics of the printed pixels and the lenticular sheet pitch. This may be achieved by ensuring relatively precise registration of the printed pixels with the lenticules of the lenticular sheet. Further, the quality of the lenticular sheet should be controlled to minimise surface reflections and scattering and to provide resistance to scratching. The sheet should also be relatively free from inhomogeneities.

In order to provide a 3D print of A4 standard size to be viewable by an observer located between 500 and 1,000 millimetres from the print, assuming that the limit of visual acuity is of the order of 1/2000, the lenticular pitch of the lenticular sheet is preferably between 250 and 500 micrometers to prevent the lenticular structure from being highly visible. As the number of 2D views increases, the degree of motion parallax in the 3D image increases. For example, the number of views may be 10. Therefore, the width of each of the 2D pixel image stripes is of the order of 25 micrometers. The 2D pixel height will be of the order of 250 micrometers. If the 3D print is viewed in projection (as aforementioned), then the stripe width of each of the 2D pixel image stripes is reduced proportionally to the magnifications.

The lateral freedom of movement of the observer can be restricted to approximately 200 millimetres using lenticular techniques. Thus, the focal length of the lenticules should be approximately 625 micrometers.

In such a printed hard-copy, the observer may see a sliced 3D image which extends over only 200 millimetres. Thus, with the A4 size sheet having its major axis disposed horizontally, the views will repeat at the edges of the print, thus producing erroneous information. In order to fill the print with one complete view for each eye, as illustrated in Figure 3, the relative positions of the 3D pixels with respect to the centres of the lenticules increase from the centre towards the edges of the print. By increasing the relative horizontal position of the 3D pixels with respect to the optical axes of the lenticules by 13 micrometers for each 10 mm displacement away from the centre of the print, this problem can be overcome and each eye of the observer sees a single 2D view across the whole width of the print.

In order to provide 3D pixels whose minimum dimensions are of the order of 25 micrometers, printing to a resolution of 1,000 dots per inch (dpi) is required. Further, this resolution is desirable for a pixel capable of intrinsic grey-scale. However, if the printing process cannot produce intrinsic grey-scale, then increased resolution would be required. The positional integrity or addressability should be about ten times the resolution and is therefore required to be approximately 2.5 micrometers. Further, the positional accuracy of the printed pixels under each lenticule with respect to the geometry of the lenticule needs to be maintained across the whole width of the lenticular sheet. Although this could be achieved by manufacturing the lenticular sheet accurately with regard to lenticule-to-lenticule spacing and ensuring that the scanning system is accurate to about 2.5 micrometers over a scanned A4 field, the necessary precision would make such technology relatively expensive to achieve. These requirements on resolution may be substantially relaxed by ensuring that the "writing beam" in the printing technique described hereinafter is registered to the lenticules of the lenticular sheet during or before the writing process. This technique also has the advantage that it can tolerate an amount of skew in the positioning of the lenticular sheet with respect to the writing beam. For instance, this may be achieved by pre-scanning the lenticular sheet and recording the position of transitions from one lenticule to another so as to ensure the necessary resolution during a subsequent printing scan.

The printing technique employed in the preferred embodiment is laser induced thermal transfer, for instance of the type described in WO 91/10310. This technique, which is capable of continuous tone and half tone, employs a focused laser beam and is capable of achieving the necessary precision, for instance as described herein above. The printing resolution is then dependent on a scanning system, and is achievable at reasonable cost using known technology.

Printing is performed by scanning a modulated laser beam in accordance with a raster-scan pattern. The laser beam scans a suitable dye donor sheet which absorbs the focused laser light and converts the energy to heat, which then causes the transfer of a coloured dye from the heated area to the back of the lenticular sheet. The back of the lenticular sheet may be coated or laminated with any suitable material onto which a comparatively stable image can be deposited. This may, for instance, comprise a copolymer such as PVC or polyester.

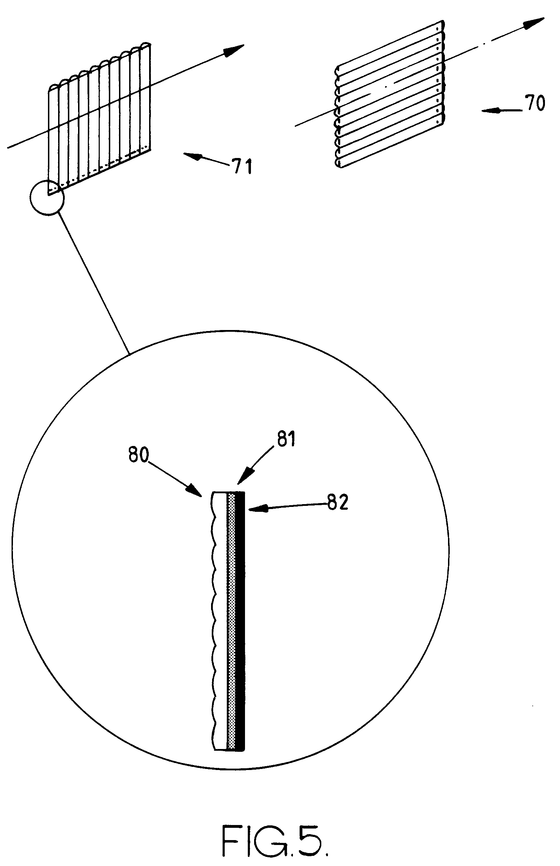

A raster scan pattern has a "fast scan" axis and a "slow scan" axis and there are two main possible orientations for the fast scan axis with respect to the lenticules of the lenticular sheet, namely scanning along each lenticule, and scanning substantially perpendicularly to the lenticules. Fast-scanning along the lenticules is illustrated at 70 in Figure 5 whereas fast-scanning perpendicularly to the lenticules is illustrated at 71.

Figure 5 shows an enlarged cross-sectional view of the edge of the print. During printing, a lenticular sheet 80 backed by a colourant receiving layer 81 receives dye in accordance with the image to be printed from a colour donor sheet 82. The scanning beams are focused onto the donor sheet 82 and are modulated so as to vary the quantity of dye transferred to the receiving layer 81 in accordance with the image to be printed.

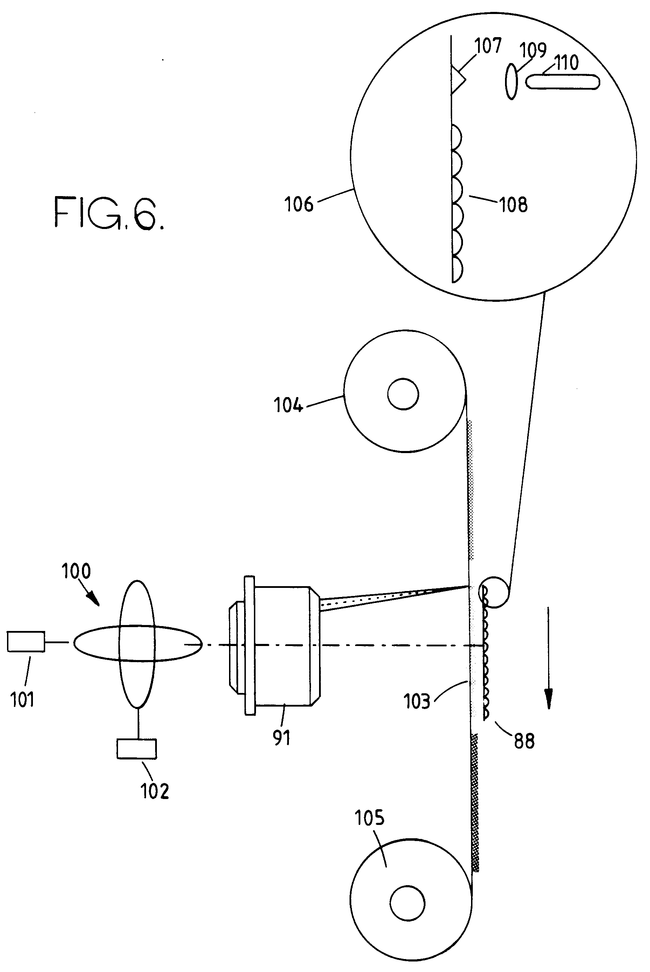

Figure 6 illustrates diagrammatically a printing apparatus adopting a pre-objective scanning technique. A light source (not shown) comprising a laser diode whose output is modulated in accordance with the image to be printed directs a writing beam to a two-axis scanning system 100 incorporating positional encoders 101 and 102 forming part of a feedback servo-control loop for controlling accurate scanning of the writing beam. The collimated and scanned writing beam is focused by the optical system 91 onto a trichromat donor sheet 103 carrying a suitable dye and supplied from a feed spool 104 to a take-up spool 105.

After printing of each lenticular sheet, the donor sheet is advanced so as to locate a fresh portion at the printing region for printing the next lenticular sheet. The lenticular sheet 88 is located adjacent the donor sheet 103 at the printing region during printing, and suitable feed and removal means are provided so as to automate the printing process. As shown in the enlarged portion 106, the lenticular sheet has a "start of sheet prism" 107 located with respect to the lenticules 108 so as to cooperate with a suitable optical system 109 and photodetector 110 to ensure that the 3D pixels are printed in correct registration with the lenticules 108. The start of scan prism 107 may be located at a corner of the sheet outside the image area and may extend linearly so as to provide a readily detectable reference position or line on the lenticular sheet 88 for use by the scanning system to ensure correct registration.

It is thus possible to provide a 3D printer of relatively compact and simple construction which is capable economically of providing 3D printed hard-copies. Such a printer may be used, for instance, to provide 3D computer aided design output, facsimile output, medical imaging, and virtual reality hard-copy. The printer may be used to print from images captured by photographic or video means, or may be used to print synthesised images, for instance synthesised by a computer. The printer is suitable for providing desk top computer 3D output.

## Claims

1. A method of making a print containing parallax information, comprising writing a plurality of picture elements (50) onto a first substrate (88), which comprises a lens array substrate or a parallax barrier substrate, wherein each of the picture elements is aligned with a respective lens (108) of the lens array substrate (88) or a respective aperture of the parallax barrier substrate, and wherein each of the picture elements (50) comprises a plurality of interlaced image elements (51) from respective images; characterised in that the picture elements (50) are written onto the first substrate (88) by selectively transferring at least one colourant from a colourant donor substrate (103); and in that the colourant is transferred by selectively heating the colourant donor substrate by scanning the colourant donor substrate with at least one modulated electromagnetic beam.

2. A method as claimed in Claim 1, characterised in that the colourant donor substrate (103) is in contact with the first substrate (88) during transfer.

3. A method as claimed in any one of the preceding claims, characterised in that the pitch of the lenses (108) of the lens array or of the apertures of the parallax barrier is less than or equal to the pitch of the picture elements.

4. A method as claimed in any one of the preceding claims, characterised in that the picture elements (50) are disposed in a plane and a light diffuser element is provided substantially at the plane of the picture elements.

5. A method as claimed in any preceding claim, characterised in that the electromagnetic beam is registered with lenses (108) of the lens array substrate or apertures of the parallax barrier substrate during or before transfer or deposition of the colourant.

6. A method as claimed in Claim 5, characterised in that the first substrate (88) has registration means (107) outside an image area thereof.

7. A method of making a 3D print, characterised in that it comprises:
locating a colourant donor substrate (103) comprising a substrate carrying at least one colourant adjacent a colourant receiving substrate (88); selectively transferring colourant to the receiving substrate (88) so as to form a plurality of 3D picture elements (50), each of which comprises a plurality of interlaced 2D picture elements (51); and aligning each 3D picture element (50) with a respective lens (107) of a lens array sheet or a respective aperture of a parallax barrier sheet; wherein the colourant is transferred by selectively heating the colourant source by scanning the colourant donor substrate with at least one modulated electromagnetic beam.

8. A method as claimed in Claim 7, characterised in that the donor substrate (103) is in contact with the receiving substrate (88) during transfer.

9. A method as claimed in any one of Claims 7 or 8, characterised in that the at least one colourant comprises at least one of dye, dye precursor, pigment, ink, and toner.

10. A method as claimed in any one of Claims 7 to 9, characterised in that the receiving substrate is bonded to the lens array sheet or parallax barrier sheet before or after the at least one colourant is transferred.

11. A method as claimed in any one of Claims 7 to 9, characterised in that the receiving substrate (88) comprises the lens array sheet or the parallax barrier sheet.

12. A method as claimed in any one of Claims 7 to 11, characterised in that the picture elements are disposed in a plane and a light diffuser element is provided substantially at the plane of the 3D picture elements.

13. A method as claimed in any one of Claims 7 to 12, characterised in that the or each electromagnetic beam is registered with the lenses (108) of the lens array sheet (88) or the apertures of the parallax barrier sheet during or before transfer of the at least one colourant.

14. A method as claimed in Claim 13, characterised in that the lens array sheet (88) or the parallax barrier sheet has registration means (107) outside an image area thereof.

15. An apparatus for making a 3D print, characterised by comprising: means for locating a colourant donor substrate (103) comprising a substrate carrying at least one colourant adjacent a colourant receiving substrate (88); means (91, 100-102) for selectively transferring colourant to the receiving substrate (88) so as to form a plurality of 3D picture elements (50), each of which comprises a plurality of interlaced 2D picture elements (51); and means for aligning each 3D picture element with a respective lens (108) of a lens array sheet (88) or a respective aperture of a parallax barrier sheet; wherein the transferring means (91, 100-102) comprises thermal transferring means for scanning the colourant donor substrate with at least one modulated electromagnetic beam so as to selectively heat the colourant source.

16. An apparatus as claimed in Claim 15, in which the scanning means comprises means for forming at least one focused laser beam.

## Patentansprüche

1. Verfahren zum Herstellen eines Parallaxeinformation enthaltenden Druckerzeugnisses, das Folgendes umfasst: Aufschreiben einer Vielzahl von Bildelementen (50) auf einen ersten Träger (88) in Form eines Linsenarrayträgers oder eines Parallaxeblendeträgers, wobei jedes der Bildelemente mit einer jeweiligen Linse (108) des Linsenarrayträgers (88) oder einer jeweiligen Öffnung des Parallaxeblendeträgers ausgerichtet wird und wobei jedes der Bildelemente (50) mehrere verschachtelte Bildelemente (51) aus jeweiligen Bildern beinhaltet; **dadurch gekennzeichnet, dass** die Bildelemente (50) dadurch auf den ersten Träger (88) geschrieben werden, dass mindestens ein Farbmittel von einem Farbmittel-Spenderträger (103) übertragen wird; und dass das Farbmittel dadurch übertragen wird, dass der Farbmittel-Spenderträger dadurch selektiv erwärmt wird, dass er mit mindestens einem modulierten elektromagnetischen Strahl abgerastert wird.

2. Verfahren nach Anspruch 1, **dadurch gekennzeichnet, dass** der Farbmittel-Spenderträger (103) während der Übertragung in Kontakt mit dem ersten Träger (88) steht.

3. Verfahren nach einem der vorstehenden Ansprüche, **dadurch gekennzeichnet, dass** die Schrittweite der Linse (108) des Linsenarrays oder der Öffnungen der Parallaxeblende kleiner als die Schrittweite der Bildelemente oder gleich groß ist.

4. Verfahren nach einem der vorstehenden Ansprüche, **dadurch gekennzeichnet, dass** die Bildelemente (50) in einer Ebene angeordnet sind und ein Lichtstreuelement im Wesentlichen in der Ebene der Bildelemente vorhanden ist.

5. Verfahren nach einem der vorstehenden Ansprüche, **dadurch gekennzeichnet, dass** der elektromagnetische Strahl während oder vor der übertragung oder Abscheidung des Farbmittels mit Linsen (108) des Linsenarrayträgers oder Öffnungen des Parallaxeblendeträgers ausgerichtet wird.

6. Verfahren nach Anspruch 5, **dadurch gekennzeichnet, dass** der erste Träger (88) außerhalb seines Bildbereichs eine Deckungsherstelleinrichtung (107) aufweist.

7. Verfahren zum Herstellen eines 3D-Druckerzeugnisses, **dadurch gekennzeichnet, dass** es Folgendes umfasst: Positionieren eines Farbmittel-Spenderträgers (103) in Form eines mindestens ein Farbmittel tragenden Trägers angrenzend an einen Farbmittel aufnehmenden Träger (88); selektives Übertragen von Farbmittel an den Aufnahmeträger (88), um eine Vielzahl von 3D-Bildelementen (50) zu erzeugen, von denen jedes mehrerer verschachtelte 2D-Bildelemente (51) umfasst; und Ausrichten jedes 3D-Bildelements (50) mit einer jeweiligen Linse (107) eines Linsenarrayblatts oder einer jeweiligen Öffnung eines Parallaxeblendeblatts; wobei das Farbmittel dadurch übertragen wird, dass die Farbmittelquelle durch Abrastern des Farbmittel-Spenderträgers mit mindestens einem modulierten elektromagnetischen Strahl selektiv erwärmt wird.

8. Verfahren nach Anspruch 7, **dadurch gekennzeichnet, dass** der Spenderträger (103) während der Übertragung mit dem Aufnahmeträger (88) in Kontakt steht.

9. Verfahren nach einem der Ansprüche 7 oder 8, **dadurch gekennzeichnet, dass** das mindestens eine Farbmittel aus einem Farbstoff, einem Farbstoffvorläufer, einem Pigment, einer Tinte und/oder einem Toner besteht.

10. Verfahren nach einem der Ansprüche 7 bis 9, **dadurch gekennzeichnet, dass** der Aufnahmeträger vor oder nach dem Übertragen mindestens eines Farbmittels mit dem Linsenarrayblatt oder dem Parallaxeblendeblatt verbunden wird.

11. Verfahren nach einem der Ansprüche 7 bis 9, **dadurch gekennzeichnet, dass** das Aufnahmesubstrat (88) das Linsenarrayblatt oder das Parallaxeblendeblatt aufweist.

12. Verfahren nach einem der Ansprüche 7 bis 11, **dadurch gekennzeichnet, dass** die Bildelemente in einer Ebene angeordnet sind und ein Lichtstreuelement im Wesentlichen in der Ebene der 3D-Bildelemente vorhanden ist.

13. Verfahren nach einem der Ansprüche 7 bis 12, **dadurch gekennzeichnet, dass** der oder jeder elektromagnetische Strahl während oder vor der übertragung des mindestens einen Farbmittels mit den Linsen (108) des Linsenarrayblatts (88) oder den Öffnungen des Parallaxeblendeblatts zur Deckung gebracht wird.

14. Verfahren nach Anspruch 13, **dadurch gekennzeichnet, dass** das Linsenarrayblatt (88) oder das Parallaxeblendeblatt eine Deckungsherstellungseinrichtung (107) außerhalb seines Bildbereichs aufweist.

15. Vorrichtung zum Herstellen eines 3D-Druckerzeugnisses, **gekennzeichnet durch**: eine Einrichtung zum Positionieren eines Farbmittel-Spenderträgers (103) in Form eines mindestens ein Farbmittel tragenden Trägers angrenzend an ein Farbmittel-Aufnahmesubstrat (88); einer Einrichtung (91, 100 - 102) zum selektiven Übertragen von Farbmittel an den Aufnahmeträger (88), um eine Vielzahl von 3D-Bildelementen (50) herzustellen, von denen jedes mehrere verschachtelte 2D-Bildelemente (51) enthält; und eine Einrichtung zum Ausrichten jedes 3D-Bildelements mit einer jeweiligen Linse (108) eines Linsenarrayblatts (88) oder einer jeweiligen Öffnung eines Parallaxeblendeblatts; wobei die Übertragungseinrichtung (91, 100 - 102) eine Thermoübertragungseinrichtung zum Abrastern des Farbmittel-Spenderträgers mit mindestens einem modulierten elektromagnetischen Strahl zum selektiven Erwärmen der Farbmittelquelle aufweist.

16. Vorrichtung nach Anspruch 15, bei der die Abrastereinrichtung eine Einrichtung zum Erzeugen mindestens eines fokussierten Laserstrahls aufweist.

## Revendications

1. Procédé de réalisation d'une impression contenant des informations de parallaxe, comprenant l'écriture d'une multiplicité d'éléments d'image (50) sur un premier substrat (88), qui comprend un substrat de matrice de lentilles ou un substrat de barre de parallaxe, dans lequel chacun des éléments d'image est aligné avec une lentille respective (108) du substrat de matrice de lentilles (88) ou une ouverture respective du substrat de barre de parallaxe, et dans lequel chacun des éléments d'image (50) comprend une multiplicité d'éléments d'image entrelacés (51) à partir des images respectives ; caractérisé en ce que les éléments d'image (50) sont écrits sur le premier substrat (88) par transfert sélectif d'au moins un colorant à partir d'un substrat donneur de colorant (103) ; et en ce que le colorant est transféré par chauffage sélectif du substrat donneur de colorant par balayage du substrat donneur de colorant à l'aide d'au moins un faisceau électromagnétique modulé.

2. Procédé selon la revendication 1, caractérisé en ce que le substrat donneur de colorant (103) se trouve au contact du premier substrat (88) lors du transfert.

3. Procédé selon l'une quelconque des revendications précédentes, caractérisé en ce que le pas des lentilles (108) de la matrice de lentilles ou des ouvertures de la barre de parallaxe est inférieur ou égal au pas des éléments d'image.

4. Procédé selon l'une quelconque des revendications précédentes, caractérisé en ce que les éléments d'image (50) sont disposés dans un plan et un élément de diffusion lumineuse est placé pratiquement dans le plan des éléments d'image.

5. Procédé selon l'une des revendications précédentes, caractérisé en ce que le faisceau électromagnétique est aligné sur les lentilles (108) du substrat de la matrice de lentilles ou sur les ouvertures du substrat de barre de parallaxe pendant ou avant le transfert ou le dépôt du colorant.

6. Procédé selon la revendication 5, caractérisé en ce que le premier substrat (88) dispose d'un moyen d'alignement (107) à l'extérieur d'une de ses zones d'image.

7. Procédé de réalisation d'une impression en 3D, caractérisé en ce qu'il comprend la localisation d'un substrat donneur de colorant (103) comprenant un substrat portant au moins un colorant adjacent à un substrat de réception de colorant (88) ; le transfert sélectif d'un colorant sur le substrat de réception (88) afin de former une multiplicité d'éléments d'image 3D (50), chacun d'eux comprenant une multiplicité d'éléments d'image 2D entrelacés (51) ; et l'alignement de chaque élément d'image 3D (50) avec une lentille respective (107) d'une feuille de matrice de lentilles ou d'une ouverture respective d'une feuille de barre de parallaxe ; dans lequel le colorant est transféré par chauffage sélectif de la source de colorant en balayant le substrat donneur de colorant à l'aide d'au moins un faisceau électromagnétique modulé.

8. Procédé selon la revendication 7, caractérisé en ce que le substrat donneur (103) se trouve en contact avec le substrat récepteur (88) au cours du transfert.

9. Procédé selon l'une quelconque des revendications 7 ou 8, caractérisé en ce que ledit au moins un colorant comprend au moins au choix une teinture, un primaire de teinture, un pigment, une encre et un toner.

10. Procédé selon l'une quelconque des revendications 7 à 9, caractérisé en ce que le substrat récepteur est collé sur la feuille de matrice de lentilles ou la feuille de barre de parallaxe avant ou après le transfert dudit au moins un colorant.

11. Procédé selon l'une quelconque des revendications 7 à 9, caractérisé en ce que le substrat récepteur (88) comprend la feuille de matrice de lentille ou la feuille de barre de parallaxe.

12. Procédé selon l'une quelconque des revendications 7 à 11, caractérisé en ce que les éléments d'image sont disposés dans un plan et un élément diffuseur de lumière est placé pratiquement dans le plan des éléments d'image 3D.

13. Procédé selon l'une quelconque des revendications 7 à 12 caractérisé en ce que le ou les faisceaux électromagnétiques sont alignés sur les lentilles (108) ou la feuille de matrice de lentilles (88) ou sur les ouvertures de la feuille de barre de parallaxe durant ou avant le transfert dudit au moins un colorant.

14. Procédé selon la revendication 13, caractérisé en ce que la feuille de matrice de lentilles (88) ou la feuille de barre de parallaxe dispose de moyens d'alignement (107) situés au-dehors d'une de ses zones d'image.

15. Dispositif destiné à réaliser une impression en 3D, caractérisé en ce qu'il comprend : un moyen de localisation d'un substrat donneur de colorant (103) comprenant un substrat portant au moins un substrat récepteur de colorant adjacent (88) ; un moyen (91, 100-102) destiné au transfert sélectif d'un colorant sur le substrat récepteur (88) afin de former une multiplicité d'éléments d'image 3D (50), chacun d'eux comprenant une multiplicité d'éléments d'image 2D entrelacés (51) ; et un moyen d'alignement de chacun des éléments d'image 3D sur une lente respective (108) d'une feuille de matrice de lentes (88) ou sur une ouverture respective d'une feuille de barre de parallaxe ; dans lequel le moyen de transfert (91, 100-102) comprend un moyen de transfert thermique destiné à balayer le substrat donneur de colorant à l'aide d'au moins un faisceau électromagnétique modulé afin de chauffer sélectivement la source de colorant.

16. Dispositif selon la revendication 5, dans lequel le moyen de balayage comprend un moyen destiné à former au moins un faisceau laser focalisé.
